# EUROPÄISCHE PATENTSCHRIFT

(11) **EP 3 587 220 B1**
(45) Veröffentlichungstag und Bekanntmachung des Hinweises auf die Patenterteilung: **07.04.2021**
(21) Anmeldenummer: 19189479.9
(22) Anmeldetag: 16.06.2017
(51) Int. Cl.: B62D 13/06, B62D 15/02, G05D 1/02

(54) **FAHRZEUG MIT RANGIERSYSTEM**
VEHICLE WITH SHUNTING SYSTEM
VÉHICULE COMPRENANT UN SYSTÈME DE MANOEUVRE

(30) Priorität: 24.06.2016 DE 102016111618
(43) Veröffentlichungstag der Anmeldung: 01.01.2020
(62) Teilanmeldung aus: 17176508.4
(73) Patentinhaber: Deutsche Post AG, 53113 Bonn (DE)
(72) Erfinder: Augspurger, Tobias, 52066 Aachen (DE); Athmer, Tobias, 52070 Aachen (DE); Hamm, Markus, 52072 Aachen (DE); Schmitt, Fabian, 4731 Eynatten (BE); Sommer, Martin, 52080 Aachen (DE); Kraft, Oskar, 52222 Stollberg (DE); Bellof, Marco, 52070 Aachen (DE)
(74) Vertreter: Michalski Hüttermann & Partner Patentanwälte mbB

(56) Entgegenhaltungen:
- DE-A1-102011 003 231
- DE-A1-102012 022 336
- US-A1- 2016 075 281

## Beschreibung

Die Erfindung betrifft ein Verfahren zum Rangieren eines vorbestimmten Teils eines Fahrzeugs in eine von einem Zielobjekt gegebene Zielposition.

Im Bereich des Transportwesens und der Logistik ist ein schnelles und sicheres Umschlagen von Waren von großer Bedeutung. Häufig werden Waren für den Transport in Frachtbehältern, wie z.B. Containern, Rollcontainern oder Wechselbrücken verstaut, die mittels Nutzfahrzeugen oder Unterfahrschleppern unterfahren und für den Weitertransport aufgenommen werden. Die Fahrzeuge zum Aufnehmen der Waren müssen dabei unter den aufzunehmenden Frachtbehälter rangiert werden. Maßgeblich hierfür ist ein schnelles und sicheres Rangieren. Heutzutage geschieht das Rangieren häufig mit Hilfe von Sensoreinrichtungen, die am Fahrzeug angebracht sind und ein Zielobjekt erfassen und mittels einer Berechnungseinrichtung eine Bahn des Fahrzeugs in die von dem Zielobjekt gegebene Zielposition berechnen können.

Im Stand der Technik sind verschiedene Verfahren und Vorrichtungen zum sensorgestützten Rangieren und Unterfahren eines Objektes bekannt. So wird in der DE 195 26 702 A1 ein System zum Rückwärtsrangieren und zum Umschlagen von Wechselbehältern beschrieben, bei dem eine auf die Zone der rückwärtigen Fahrtrichtung ausgerichtete Kamera am Straßenfahrzeug oder Anhänger befestigt ist, dessen Lenkung beim Rückwärtsrangieren in eine vorgegebene Zielposition für das Umschlagen von Behältern mit einer Regeleinrichtung selbsttätig geregelt wird.

In der DE 10 2006 035 929 A1 wird ein Verfahren zum sensorgestützten Unterfahren eines Objekts, insbesondere einer Wechselbrücke, mit einem Nutzfahrzeug beschrieben, wobei Umgebungsinformationen von wenigstens einem am Heck des Nutzfahrzeugs angeordneten Sensors erfasst werden und anhand der erfassten Umgebungsinformationen die Relativposition zwischen dem Objekt und dem Nutzfahrzeug bestimmt wird.

Auch die DE 10 2006 057 610 A1 beschreibt ein Verfahren und eine Vorrichtung zum bildgestützten Andocken an ein Zielobjekt mit einem Fahrzeug. Dabei werden Entfernungsinformationen aus der Umgebung des Fahrzeugs mittels eines am Heck des Fahrzeugs angebrachten Bildsensors erfasst. Anhand der Entfernungsinformationen werden der Abstand zwischen dem Fahrzeug und dem Zielobjekt bestimmt sowie eine Fahrzeughöhenregelung zum Andocken an das Zielobjekt durchgeführt.

Die DE 10 2011 003 231 A1 beschreibt ein Verfahren zum automatischen Durchführen eines Fahrmanövers mit einem Kraftfahrzeug, das folgende Schritte umfasst: Erfassen der Umgebung des Kraftfahrzeugs mit einem ersten Erfassungssystem während der Vorbeifahrt an einer Parklücke, Berechnen einer Trajektorie, entlang der das Kraftfahrzeug während des Fahrmanövers bewegt wird, anhand der in Schritt erfassten Umgebungsdaten, automatisches Bewegen des Kraftfahrzeugs entlang der Trajektorie zur Durchführung des Fahrmanövers, wobei die Umgebung des Kraftfahrzeugs mit einem zweiten vom ersten verschiedenen Erfassungssystem erfasst wird während sich das Kraftfahrzeug bewegt.

Aus der DE 10 2012 022 336 A1 ist ein Verfahren zum Durchführen eines semiautonomen Parkvorgangs eines Kraftfahrzeugs in eine Garage bekannt, wobei mittels eines Parkassistenzsystems des Kraftfahrzeugs die Garage detektiert wird und eine aktuelle Lage des Kraftfahrzeugs relativ zur Garage bestimmt wird, und wobei nach Detektion der Garage der zumindest semi-autonome Parkvorgang abhängig von der aktuellen Lage des Kraftfahrzeugs relativ zur Garage durchgeführt wird, wobei mittels einer Kamera des Parkassistenzsystems ein Bild der Garage erfasst wird und das Detektieren der Garage umfasst, dass mittels einer Bildverarbeitungseinrichtung des Parkassistenzsystems das Bild einer Mustererkennung hinsichtlich einer Garageneinfahrt unterzogen wird und mittels der Mustererkennung die Garage identifiziert wird.

Schließlich beschreibt die US 2016/075281 A1 ein System zum Überwachen von verfügbarem Raum zum Manövrieren eines Fahrzeugs zum Ausrichten einer an dem Fahrzeug montierten Anhängerkupplung relativ zu einer Anhängerkupplung, die an einem Anhänger montiert ist. Ein Abbildungssystem ist vorgesehen, um Bilddaten zu erzeugen. Ein Prozessor ist konfiguriert, um die Bilddaten zu analysieren, um Hindernisse in der Nähe des Fahrzeugs und/oder des Anhängers zu identifizieren und zu bestimmen, ob ausreichend Platz zum Manövrieren des Fahrzeugs zum Ausrichten der Anhängerkupplung verfügbar ist.

Problematisch bei diesen Verfahren und Vorrichtungen ist häufig die Platzierung der Sensoreinrichtungen am Fahrzeug. Gerade der sensible Vorgang während des Unterfahrens des Zielobjekts kann z.B. bei tiefstehender Sonne, die auf eine optische Sensoreinrichtung scheint, unter Umständen nicht vollständig überwacht oder überhaupt nicht durchgeführt werden. Für eine funktionierende Relativpositionierung muss mindestens auch das Zielobjekt wahrgenommen werden können. Ist dies nicht der Fall, z.B. aufgrund von Blendung, ist der Vorgang generell nicht durchführbar. Unfälle und Beschädigungen an Fahrzeugen, Frachtbehältern und Waren können die Folge sein.

Ausgehend davon liegt der Erfindung somit die Aufgabe zugrunde, eine Möglichkeit bereitzustellen, um ein schnelles, sicheres und robustes Rangieren durch eine verbesserte Überwachung des Rangierprozesses und eine verbesserte Bahnberechnung des vorbestimmten Teils des Fahrzeugs in die Zielposition zu ermöglichen. Unfälle und Schäden an Frachtbehältern, Fahrzeugen und Waren sollen dadurch vermieden werden, und unabhängig von Witterungseinflüssen soll in der Praxis eine hohe Verfügbarkeitsquote erzielt werden.

Die Lösung der Aufgabe erfolgt erfindungsgemäß durch den Gegenstand des Anspruchs 1. Vorteilhafte Ausgestaltungen der Erfindung sind in den Unteransprüchen angegeben.

Erfindungsgemäß vorgesehen ist damit ein Verfahren zum Rangieren eines vorbestimmten Teils eines Fahrzeugs in eine von einem Zielobjekt gegebene Zielposition, mit folgenden Schritten:
Erfassen des Zielobjekts mit einer ersten am Fahrzeug angeordneten optischen Sensoreinrichtung,
Erfassen des Zielobjekts mit einer zweiten am Fahrzeug angeordneten optischen Sensoreinrichtung, die relativ zur ersten optischen Sensoreinrichtung in Längsrichtung des Fahrzeugs versetzt am Fahrzeug angeordnet ist, und
Berechnen einer Bahn des vorbestimmten Teils des Fahrzeugs in die Zielposition mit Hilfe eines von der ersten optischen Sensoreinrichtung erfassten Bildes des Zielobjekts und mit Hilfe eines von der zweiten optischen Sensoreinrichtung erfassten Bildes des Zielobjekts.

Vorzugsweise ist vorgesehen, dass die erste optische Sensoreinrichtung ein 2D-LIDAR-Sensor ist und die zweite optische Sensoreinrichtung ein 3D-LIDAR-Sensor ist, der tiefer und weiter hinten am Fahrzeug angeordnet ist als die erste optische Sensoreinrichtung.

Weiter sind gemäß einer bevorzugten Weiterbildung der Erfindung zwei zweite optische Sensoreinrichtungen in Form eines jeweiligen 3D-LIDAR-Sensors vorgesehen, die im Bereich der hinteren rechten Kante bzw. der hinteren linken Kante des Fahrzeugs angeordnet sind. Vorzugsweise ist dabei zwischen den 3D-LIDAR-Sensoren eine Stereo-Kamera angeordnet.

Erfindungsgemäß wird mit wenigstens einer der beiden optischen Sensoreinrichtungen erfasst, ob das Zielobjekt seitlich oder/und längs seiner Längsachse geneigt ist. Insbesondere kann dafür eine Nachjustierung beim Rangieren erfolgen.

Dieses Verfahren ist verwendbar mit einem Fahrzeug mit einem Rangiersystem zum Rangieren eines vorbestimmten Teils des Fahrzeugs in eine von einem Zielobjekt gegebene Zielposition, wobei das Rangiersystem eine erste am Fahrzeug angeordnete optische Sensoreinrichtung zum Erfassen des Zielobjekts und eine Berechnungseinrichtung zum Berechnen einer Bahn des vorbestimmten Teils des Fahrzeugs in die Zielposition mit Hilfe eines von der ersten optischen Sensoreinrichtung erfassten Bildes des Zielobjekts aufweist, wobei das Rangiersystem eine zweite optische Sensoreinrichtung aufweist, die relativ zur ersten optischen Sensoreinrichtung in Längsrichtung des Fahrzeugs versetzt am Fahrzeug angeordnet ist. Durch die versetzt angeordnete zweite optische Sensoreinrichtung wird eine verbesserte Überwachung des Rangierprozesses und eine verbesserte Bahnberechnung des vorbestimmten Teils des Fahrzeugs in die Zielposition ermöglicht.

Unter optischen Sensoreinrichtungen werden vorliegend Systeme verstanden, die elektromagnetische Wellen im Bereich vom Ultravioletten bis zum Infrarot erfassen und in elektrische Signale umwandeln. Detektiert wird das Licht, das von einem Objekt reflektiert oder emittiert wird. Grundsätzlich wird zwischen aktiven und passiven Sensoren unterschieden, wobei aktive Sensoren selbst Licht aussenden und passive Sensoren nur für die Detektion von Licht vorgesehen sind.

In vorteilhafter Ausgestaltung der Erfindung handelt es sich bei den optischen Sensoreinrichtungen um Kameras und/oder LIDAR-Sensoren und/oder Time-of-Flight-Kameras und/oder um Stereo-Kameras. Mit dem Begriff "Bild" ist insofern vorliegend all das gemeint, was mit derartigen optischen Sensoren erfasst werden kann. Grundsätzlich ist eine beliebige Kombination dieser Arten von Sensoreinrichtungen möglich. Die zuvor genannten optischen Sensoreinrichtungen erlauben die bildliche Darstellung von Entfernungen einer ganzen Szene in 2D oder 3D. Der Begriff LIDAR steht für englisch: "Light detection and ranging" und bezeichnet ein Verfahren zur optischen Abstands- und Geschwindigkeitsmessung. Dieses Verfahren wird bevorzugt bei fahrerlosen Transportfahrzeugen zur Hinderniserkennung und zur Vermeidung von Unfällen mit Personen, die die automatischen Fahrwege kreuzen könnten, verwendet.

TOF-Kameras (englisch: time of flight, TOF, auch ToF) sind 3D-Kamerasysteme, die mit einem Laufzeitverfahren Distanzen messen. Dazu wird eine zu vermessende Szene mittels eines Lichtpulses ausgeleuchtet und die Kamera misst für jeden Bildpunkt die Zeit, die das Licht bis zum Objekt und wieder zurück braucht. Die benötigte Zeit ist direkt proportional zur Distanz. Die zuvor genannten Sensoreinrichtungen sind besonders vorteilhaft, da sie für jeden Bildpunkt die Entfernung des darauf abgebildeten Objektes erfassen können. Objekte können dadurch mittels einer Bildanalyse der aufgenommenen Bilder erkannt werden und die optimale Bahn des vorbestimmten Teils des Fahrzeugs in die Zielposition mittels der Berechnungseinrichtung berechnet werden.

Grundsätzlich können die optischen Sensoreinrichtungen auf der selben Höhe angeordnet sein. Vorteilhaft sind die Sensoreinrichtungen jedoch längs der Hochachse des Fahrzeugs versetzt am Fahrzeug angebracht. Als Hochachse wird die z-Achse des Koordinatensystems bezeichnet. Durch eine versetzte Anordnung der Sensoreinrichtungen entlang der Hochachse des Fahrzeugs können unterschiedliche Bereiche besser überwacht werden, so dass der Rangierprozesses besser überwacht und die Bahn genauer berechnet werden kann. Zusätzlich oder alternativ dazu ist gemäß einer bevorzugten Weiterbildung der Erfindung vorgesehen, dass die beiden optischen Sensoreinrichtungen unterschiedliche Nickwinkel aufweisen, also längs der Querachse des Fahrzeugs unterschiedlich rotiert sind.

Die optischen Sensoreinrichtungen können grundsätzlich fest bzw. starr installiert sein. Vorzugsweise ist jedoch vorgesehen, dass die Höhe wenigstens einer der optischen Sensoreinrichtungen, vorzugsweise die Höhen beider optischer Sensoreinrichtungen, verstellbar ist bzw. sind. Die Höhenverstellung ist vorteilhaft, um die optischen Sensoreinrichtungen an verschiedene Situationen anzupassen und so für jede optische Sensoreinrichtung die beste Sicht auf das zu erfassende Zielobjekt zu ermöglichen. Des Weiteren kann eine Höhenverstellung bei einer Änderung des vorbestimmten Teils des Fahrzeugs sinnvoll sein. Beispielsweise kann dadurch der vorbestimmte Teil des Fahrzeugs gewechselt und das Fahrzeug mit der anderen Seite in eine von einem Zielobjekt gegebene Zielposition rangiert werden. Dies kann insbesondere bei autonomen Transsportfahrzeugen sinnvoll sein, die dafür ausgelegt sind, die Frachtbehälter mit beiden Enden ihrer Längsrichtung zu unterfahren und aufzunehmen. Ein umständliches Umrangieren des Fahrzeugs kann daher durch die einfache Höhenverstellung der optischen Sensoreinrichtungen vermieden werden.

Gemäß einer weiteren Ausgestaltung der Erfindung kann es vorgesehen sein, dass die erste optische Sensoreinrichtung an dem vorbestimmten Teil des Fahrzeugs angebracht ist und die zweite optische Sensoreinrichtungen an einer derartigen Stelle am Fahrzeug angebracht ist, aus welcher die zweite optische Sensoreinrichtung das für das Rangieren relevante Bild des Zielobjekts aus einer zur Position der ersten optischen Sensoreinrichtung erhöhten Position erfassen kann. Durch solch eine Anordnung der optischen Sensoreinrichtungen wird sichergestellt, dass beide optische Sensoreinrichtungen das Zielobjekt optimal erfassen können. Transportfahrzeuge zum Transport von Waren besitzen häufig eine flache, parallel zur Fahrbahn verlaufende Ladefläche, die für die Aufnahme von Frachtbehältern konzipiert ist.

Durch die erhöhte Position der zweiten optischen Sensoreinrichtung kann nicht nur eine optimale Erfassung des Zielobjekts, sondern auch eine Überwachung der Ladefläche sichergestellt werden. Auf der Ladefläche befindliche Hindernisse, die bei der Aufnahme der Frachtbehälter hinderlich sein könnten, können somit frühzeitig erkannt und Unfälle können verhindert werden. Des Weiteren wird sichergestellt, dass mittels der zweiten optischen Sensoreinrichtung das Zielobjekt erfasst werden kann, falls mittels der ersten optischen Sensoreinrichtung das Erfassen des Zielobjekts nicht möglich ist. Alternativ oder zusätzlich dazu kann es vorgesehen sein, dass der Blickwinkel der ersten optischen Sensoreinrichtung vom Blickwinkel der zweiten optischen Sensoreinrichtung verschieden ist. Verschiedene Blickwinkel können für das Erfassen des Zielobjekts von Vorteil sein.

Alternativ oder zusätzlich dazu kann außerdem vorgesehen sein, dass wenigstens eine optische Sensoreinrichtung, vorzugweise beide optische Sensoreinrichtungen, drehbar und/oder schwenkbar ist bzw. sind und somit der Blickwinkel wenigstens einer der optischen Sensoreinrichtungen, vorzugsweise die Blickwinkel beider optischer Sensoreinrichtungen, verstellbar ist bzw. sind. Durch drehbar und/oder schwenkbar angeordnete optische Sensoreinrichtungen kann immer ein möglichst guter Blickwinkel auf das zu erfassende Zielobjekt erzielt werden. Des Weiteren kann das Drehen und/oder Schwenken von Vorteil sein, da sich dadurch die Anzahl der Sensoren verringern lässt. Wird beispielsweise bei einem Fahrzeug beabsichtigt, das andere Ende seiner Längsrichtung zur Aufnahme der Frachtbehälter zu verwenden, können die optischen Sensoreinrichtungen durch einfaches Schwenken und/oder Drehen auf das Zielobjekt neu ausgerichtet werden.

Vorzugsweise sind die optischen Sensoreinrichtungen derart ausgestaltet, dass sie unabhängig voneinander, aber natürlich zusammen mit der Berechnungseinrichtung, die Berechnung einer Bahn des vorbestimmten Teils des Fahrzeugs in die Zielposition erlauben. Eine unabhängige Berechnung der Bahn kann insbesondere dann von Vorteil sein, falls eine der optischen Sensoreinrichtungen nicht mehr für die Berechnung der Bahn genutzt werden kann. Dies kann beispielsweise bei einem Ausfall der optischen Sensoreinrichtungen der Fall sein oder dann, wenn eine optische Sensoreinrichtung durch das zu unterfahrende Objekt verdeckt wird oder bei schlechten Sichtbedingungen. Ferner kann die nicht für die Berechnung der Bahn verwendete optische Sensoreinrichtung für weitere Aufgaben, z.B. als Kollisionswarnsystem, eingesetzt werden.

Insbesondere kann es vorgesehen sein, dass wenigstens eine der optischen Sensoreinrichtungen, vorzugsweise beide optische Sensoreinrichtungen, entlang der Längsrichtung des Fahrzeugs verschiebbar ist bzw. sind. Alternativ oder zusätzlich dazu kann es vorgesehen sein, dass wenigstens eine der optischen Sensoreinrichtungen, vorzugsweise beide optische Sensoreinrichtungen, längs der Querachse des Fahrzeugs verschiebbar ist bzw. sind. Als Querachse wird die y-Achse des Koordinatensystems bezeichnet, die senkrecht zur Fahrtrichtung und zur Längsachse angeordnet ist. Sind die aufzunehmenden Frachtbehälter nicht genormt oder variiert ihre Größe, kann eine Verschiebung der optischen Sensoreinrichtungen entlang der Längsrichtung oder der Querachse des Fahrzeugs von Vorteil sein. Das Rangiersystem lässt sich damit auf einfache Weise auf verschiedene Frachtbehälter einstellen. Beispielsweise kann bei längeren Fahrzeugen und kleineren Containern ein Verschieben der optischen Sensoreinrichtungen Sinn machen, um einen möglichst guten Blickwinkel auf das Zielobjekt zu erreichen. Ein Verschieben der optischen Sensoreinrichtungen kann dabei auch während des Rangierprozesses erfolgen, um somit eine bestmögliche Erfassung des Zielobjekts zu erreichen.

Die Erfindung wird nachfolgend anhand eines bevorzugten Ausführungsbeispiels unter Bezugnahme auf die Zeichnungen weiter erläutert.

In den Zeichnungen zeigen
- Fig. 1: eine schematische Seitenansicht eines Fahrzeugs mit Rangiersystem gemäß einem ersten bevorzugten Ausführungsbeispiel der Erfindung,
- Fig. 2: schematisch eine Draufsicht auf einen Hubtisch eines Fahrzeugs gemäß einem zweiten bevorzugten Ausführungsbeispiel der Erfindung,
- Fig. 3: schematisch eine Seitenansicht eines Fahrzeugs gemäß dem zweiten bevorzugten Ausführungsbeispiel der Erfindung,
- Fig. 4: schematisch das Rangieren gemäß einem bevorzugten Ausführungsbeispiel der Erfindung,
- Fig. 5: schematisch eine Vorderansicht einer Wechselbrücke und
- Fig. 6: ein Ablaufdiagramm für ein Verfahren gemäß einem bevorzugten Ausfüh-rungsbeispiel der Erfindung.

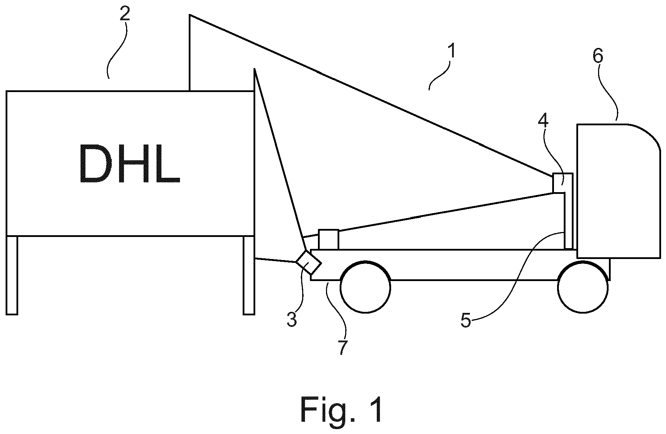

Fig. 1 zeigt eine Seitenansicht eines Fahrzeugs mit Rangiersystem gemäß einem ersten bevorzugten Ausführungsbeispiel der Erfindung, wobei das Fahrzeug 1 mit einem zum Rangieren vorbestimmten Teil 7 des Fahrzeugs 1 in eine von einem Zielobjekt 2 gegebene Zielposition in Richtung des Zielobjekts 2 zeigt. Das Zielobjekt 2 ist hier als Wechselbrücke gezeigt.

Am vorbestimmten Teil 7 des Fahrzeugs 1 ist eine erste Sensoreinrichtung 3 zum Erfassen des Zielobjekts 2 angebracht. Die erste Sensoreinrichtung 3 ist drehbar und schwenkbar montiert. Dadurch kann sichergestellt werden, dass ihr Blickwinkel der Situation angepasst werden kann und immer eine möglichst gute Erfassung des Zielobjekts 2 gewährleistet ist. Wird beim Rangieren zur Aufnahme des Zielobjekts 2 die erste Sensoreinrichtung 3 durch das Zielobjekt verdeckt, z.B. beim Unterfahren der Wechselbrücke, kann der Blickwinkel der ersten Sensoreinrichtung 3 so verändert werden, dass er den Bereich unterhalb des Zielobjekts 2 überwachen kann. Menschen und Gegenstände können dadurch erkannt und Unfälle und Kollisionen vermieden werden.

Weiter ist vorgesehen, dass die Höhe der ersten Sensoreinrichtung 3 verstellbar ist. Um das Zielobjekt 2 optimal erfassen zu können, ist eine zweite Sensoreinrichtung 4 relativ zur ersten Sensoreinrichtung 3 in Längsrichtung des Fahrzeugs 1 versetzt am Fahrzeug 1 angeordnet. Die zweite Sensoreinrichtung 4 ist an einer derartigen Stelle am Fahrzeug 1 angebracht, aus welcher sie das für das Rangieren relevante Bild des Zielobjekts 2 aus einer zur Position der ersten Sensoreinrichtung 3 erhöhten Position erfassen kann. Damit wird sichergestellt, dass der gesamte Rangiervorgang überwacht werden kann. Im Übrigen kann damit bei tief stehender Sonne eine gewisse Abschattung der ersten Sensoreinrichtung 3 durch das Zielobjekt 2 erreicht werden, so dass auch in solchen Situationen ein Rangieren ermöglicht wird, in denen die zweite Sensoreinrichtung 4 durch die Sonne geblendet ist und kein verwertbares Bild aufnehmen kann.

Die zweite Sensoreinrichtung 4 ist höhenverstellbar im Bereich der Fahrerkabine 6 des Fahrzeugs 1 mittels einer höhenverstellbaren Befestigungseinrichtung 5 angebracht. Durch die Höhenverstellung beider Sensoreinrichtungen 3, 4 kann auch erreicht werden, z.B. bei autonom fahrenden Unterfahrschleppern, dass das Fahrzeug mit beiden Enden seiner Längsrichtung in eine von einem Zielobjekt 2 gegebene Zielposition rangiert wird.

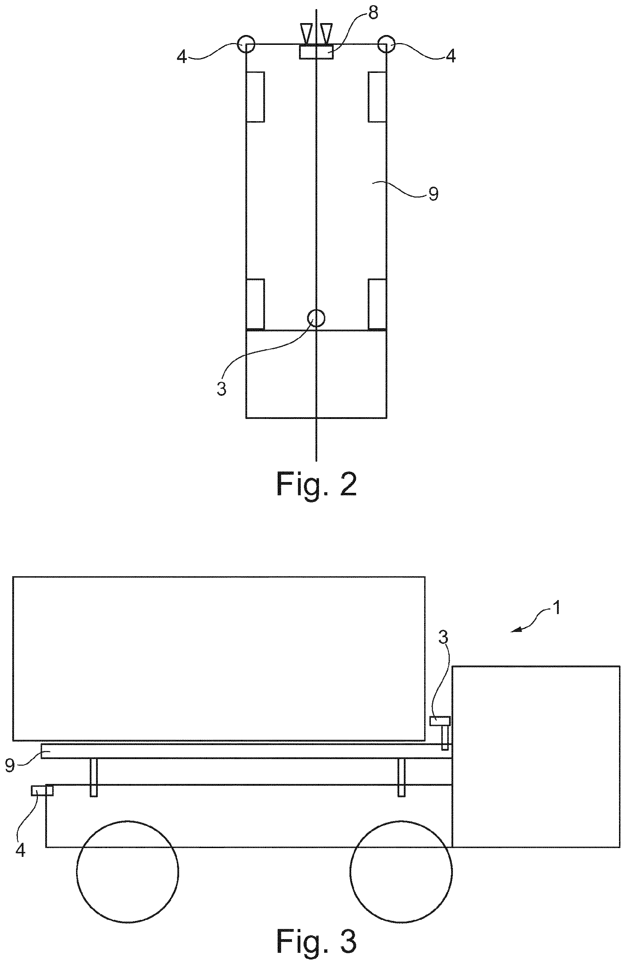

Aus Fig. 2, die schematisch eine Draufsicht auf einen Hubtisch 9 eines Fahrzeugs 1 gemäß einem zweiten bevorzugten Ausführungsbeispiel der Erfindung zeigt, ist ersichtlich, dass auf dem Hubtisch 9 in der Nähe des Führerhauses 14 des Fahrzeugs 1 ein erster optischer Sensor 3 in Form eines 2D-LIDAR-Sensors angeordnet ist. Die Anordnung des 2D-LIDAR-Sensors auf dem Hubtisch ist beweglich. An den hinteren Ecken des Hubtisches 9 ist jeweils ein zweiter optischer Sensor 4 in Form eines jeweiligen 3D-LIDAR-Sensor angeordnet. Die 3D-LIDAR-Sensor haben damit jeweils ein Sichtfeld von 270°. Dazwischen befindet sich eine Stereo-Kamera 8. Aus Fig. 3, die schematisch eine Seitenansicht des Fahrzeugs 1 zeigt, wird die Anordnung des 2D-LIDAR-Sensors und der 3D-LIDAR-Sensoren noch deutlicher. Die 3D-LIDAR-Sensoren sitzen tiefer und weiter hinten am Fahrzeug 1 als der 2D-LIDAR-Sensor.

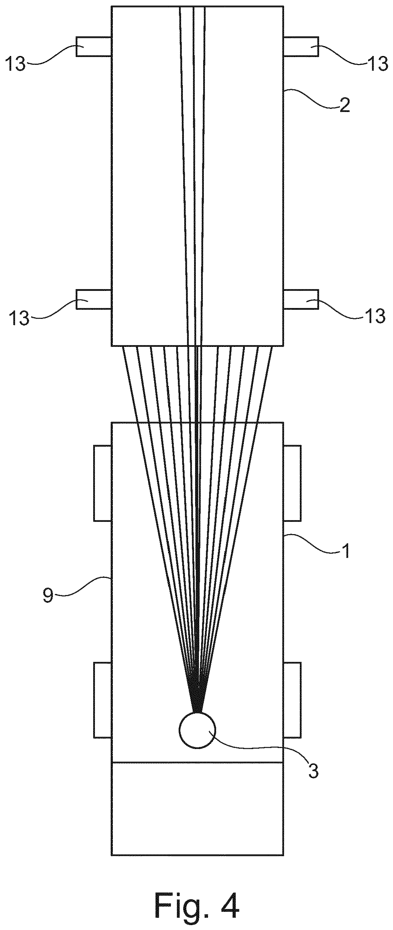

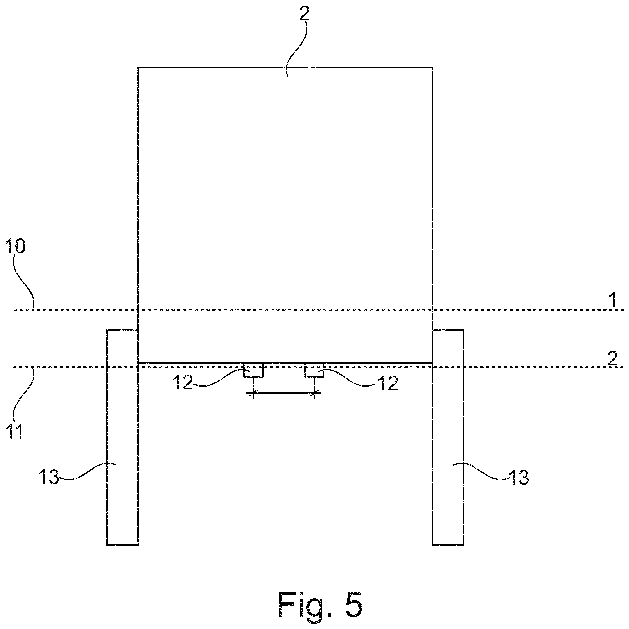

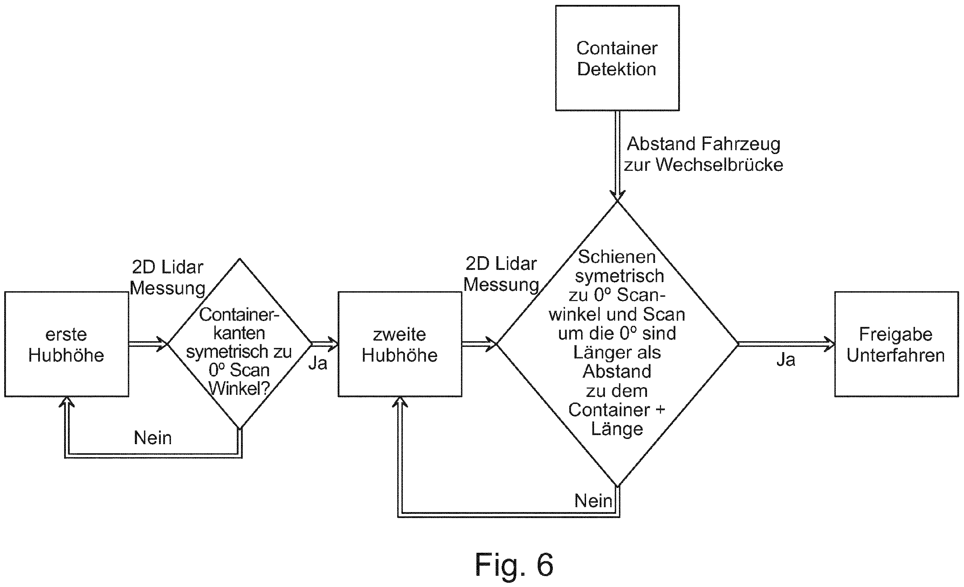

Unter Bezugnahme auf die Fig. 4, 5 und 6 wird nachfolgend ein Rangierverfahren gemäß einem bevorzugten Ausführungsbeispiel der Erfindung unter Verwendung des in den Fig. 2 und 3 gezeigten Fahrzeugs 1 erläutert. Zunächst misst der 2D-LIDAR-Sensor die Kanten des von einer Wechselbrücke auf Beinen 13 gebildeten Zielobjekts 2. Der Hubtisch 9 wird anschließend abwärts auf Höhe der Schienen 12 der Wechselbrücke bewegt. Bei einer korrekten Positionierung ergibt sich ein festes Scanprofil aus dem 2D-LIDAR-Sensor. Der 2D-LIDAR-Sensor benutzt dabei die Schienenführung als Kollimator. Somit lässt sich die Stellung des Fahrzeugs 1 relativ zum Wechselbrücke sehr präzise bestimmen.

Nach einer groben Positionierung über die Stereo-Kamera 8 und die 3D-LIDAR-Sensoren wird der Hubtisch 9 so lange angehoben, bis die Vorderfront der Wechselbrücke erkannt wird (erste Hubhöhe 10). Auf Basis des 2D-Scans kann nun zunächst überprüft werden, ob die Positionierung ausreichend genau ist. Dies geschieht über die Außenkanten der Wechselbrücke. Anschließend wird der Hubtisch 9 gesenkt, bis eine Peilung mit dem 2D-LIDAR-Sensor durch die Schienen 12 der Wechselbrücke möglich ist (zweite Hubhöhe 11). Bei einer korrekten Positionierung von Hubtisch 9 und Fahrzeug 1 muss gelten: Die mittels der LIDAR-Messung ermittelte Länge ist größer oder gleich der Länge der Wechselbrücke zuzüglich dem Abstand des 2D-LIDAR-Sensors zur Vorderfront der Wechselbrücke. Der Abstand zu der Vorderfront der Wechselbrücke ergibt sich durch eine 3D-Messung für die grobe Positionierung

### Bezugszeichenliste

| | |
|---|---|
| Fahrzeug | 1 |
| Zielobjekt | 2 |
| erste Sensoreinrichtung | 3 |
| zweite Sensoreinrichtung | 4 |
| Befestigungseinrichtung | 5 |
| Fahrerkabine | 6 |
| vorbestimmter Teil des Fahrzeugs | 7 |
| Stereo- Kamera | 8 |
| Hubtisch | 9 |
| erste Hubhöhe | 10 |
| zweite Hubhöhe | 11 |
| Schienen | 12 |
| Beine | 13 |
| Führerhaus | 14 |

## Patentansprüche

1. Verfahren zum Rangieren eines vorbestimmten Teils (7) eines Fahrzeugs (1) in eine von einem Zielobjekt (2) gegebene Zielposition, mit folgenden Schritten:
Erfassen des Zielobjekts (2) mit einer ersten am Fahrzeug (1) angeordneten optischen Sensoreinrichtung (3),
Erfassen des Zielobjekts (2) mit einer zweiten am Fahrzeug (1) angeordneten optischen Sensoreinrichtung (4), die relativ zur ersten optischen Sensoreinrichtung (3) in Längsrichtung des Fahrzeugs versetzt am Fahrzeug (1) angeordnet ist, und
Berechnen einer Bahn des vorbestimmten Teils des Fahrzeugs (7) in die Zielposition mit Hilfe eines von der ersten optischen Sensoreinrichtung (3) erfassten Bildes des Zielobjekts (2) und mit Hilfe eines von der zweiten optischen Sensoreinrichtung (3) erfassten Bildes des Zielobjekts (2) **dadurch gekennzeichnet,**
**dass** mit wenigstens einer der beiden optischen Sensoreinrichtungen (3, 4) erfasst wird, ob das Zielobjekt (2) seitlich oder/und längs seiner Längsachse geneigt ist.

2. Verfahren nach Anspruch 1, **dadurch gekennzeichnet, dass** die erste optische Sensoreinrichtung (3) ein 2D-LIDAR-Sensor ist und die zweite optische Sensoreinrichtung (4) ein 3D-LIDAR-Sensor ist, der tiefer und weiter hinten am Fahrzeug angeordnet ist als die erste optische Sensoreinrichtung (3).

3. Verfahren nach Anspruch 2, **dadurch gekennzeichnet, dass** zwei zweite optische Sensoreinrichtungen (4) in Form eines jeweiligen 3D-LIDAR-Sensors vorgesehen sind, die im Bereich der hinteren rechten Kante bzw. der hinteren linken Kante des Fahrzeugs (1) angeordnet sind.

4. Verfahren nach Anspruch 3, **dadurch gekennzeichnet, dass** zwischen den 3D-LIDAR-Sensoren eine Stereo-Kamera (8) angeordnet ist.

## Claims

1. Method for maneuvering a predetermined part (7) of a vehicle (1) into a target position given by a target object (2), comprising the following steps:
detecting the target object (2) by a first optical sensor device (3) arranged at the vehicle (1);
detecting the target object (2) by a second optical sensor device (4) arranged at the vehicle (1) offset relative to the first optical sensor device (3) in the longitudinal direction of the vehicle, and calculating a trajectory of the predetermined part of the vehicle (7) into the target position with the aid of an image of the target object (2) captured by the first optical sensor device (3) and with the aid of an image of the target object (2) captured by the second optical sensor device (3);
**characterized in that**
by means of at least one of the two optical sensor devices (3, 4) it is detected whether the target object (2) is inclined laterally and/or along its longitudinal axis.

2. Method according to claim 1, **characterized in that** the first optical sensor device (3) is a 2D LIDAR sensor and the second optical sensor device (4) is a 3D LIDAR sensor, which is arranged lower and more to the rear at the vehicle than the first optical sensor device (3).

3. Method according to claim 2, **characterized in that** two second optical sensor devices (4) are provided in the form of a respective 3D LIDAR sensor, which are located in the area of the rear right edge or the rear left edge of the vehicle (1).

4. Method according to claim 3, **characterized in that** a stereo camera (8) is arranged between the 3D LIDAR sensors.

## Revendications

1. Procédé de manœuvre d'une partie prédéterminée (7) d'un véhicule (1) dans une position cible donnée par un objet cible (2), avec les étapes suivantes :
la détection de l'objet cible (2) avec un premier dispositif capteur (3) optique disposé sur le véhicule (1),
la détection de l'objet cible (2) avec un deuxième dispositif capteur (4) optique disposé sur le véhicule (1), qui est disposé décalé sur le véhicule (1) dans la direction longitudinale du véhicule par rapport au premier dispositif capteur optique (3), et
le calcul d'une piste de la partie prédéterminée du véhicule (7) vers la position cible à l'aide d'une image de l'objet cible (2) détectée par le premier dispositif capteur (3) optique et à l'aide d'une image de l'objet cible (2) détectée par le deuxième dispositif capteur (3) optique, **caractérisé en ce**
**qu'**avec au moins un des deux dispositifs capteurs (3, 4) optiques, on peut détecter si l'objet cible (2) est incliné latéralement et/ou longitudinalement sur son axe longitudinal.

2. Procédé selon la revendication 1, **caractérisé en ce que** le premier dispositif capteur (3) optique est un capteur LIDAR 2D et le deuxième dispositif capteur (4) optique est un capteur LIDAR 3D qui est disposé plus bas et plus loin vers l'arrière sur le véhicule que le premier dispositif capteur (3) optique.

3. Procédé selon la revendication 2, **caractérisé en ce que** deux deuxièmes dispositifs capteurs (4) optiques sont prévus sous la forme de capteurs LIDAR 3D respectifs qui sont disposés dans la zone de l'arête droite arrière, respectivement de l'arête gauche arrière, du véhicule (1).

4. Procédé selon la revendication 3, **caractérisé en ce qu'**une caméra stéréo (8) est disposée entre les capteurs LIDAR 3D.
